(19) Europäisches Patentamt
European Patent Office
Office européen des brevets

(11) Publication number: **0 481 431 A2**

# (12) EUROPEAN PATENT APPLICATION

(21) Application number: **91117583.4**

(22) Date of filing: **15.10.91**

(51) Int. Cl.[5]: **C09D 7/00**, C08J 3/02

(30) Priority: **16.10.90 US 599792**
**14.05.91 US 699702**

(43) Date of publication of application:
**22.04.92 Bulletin 92/17**

(84) Designated Contracting States:
**AT BE CH DE DK ES FR GB GR IT LI LU NL SE**

(71) Applicant: **UNION CARBIDE CHEMICALS & PLASTICS TECHNOLOGY CORPORATION,**
**Three Cristina Centre**
**201 North Walnut Street**
**Wilmington, Delaware 19801(US)**

(72) Inventor: **Argyropoulos, John Nicholas**
**35 Michael Street**
**Scott Depot, Virginia 25560(US)**
Inventor: **Lear, Jeffrey Joseph**
**344 Roxalana Hills Drive**
**Dunbar, Virginia 25046(US)**
Inventor: **Hoy, Kenneth Look**
**839 McOueen Boulevard**
**St. Albans, Virginia 25177(US)**
Inventor: **Donohue, Marc David**
**4569 Hemlock Cone way**
**Ellicot City, Maryland 21043(US)**

(74) Representative: **Goetz, Rupert, Dipl.-Ing. et al**
**Wuesthoff & Wuesthoff Patent- und Rechtsanwälte Schweigerstrasse 2**
**W-8000 München 90(DE)**

## (54) Pressurized fluid composition and process for making same.

(57) A transportable polymer-fluid composition and process for making the same is described. The composition comprises

(I) a dissolved fluid which at normal temperature and pressure at standard conditions of 0°C. and one atmosphere (STP) is a gas; and

(II) a thermoplastic or thermosettable polymer having

(a) a plurality of moieties with the intermolecular disruption characteristics of mono, di or tri substituted fluorine on carbon and mono, di or tri substituted methyl on carbon or silicon, in which said carbon and silicon are a part of, or are directly or indirectly covalently attached to, the skeleton of the polymer's main structure, and are each no more than about 12 covalently bonded atoms from the covalent linkage to an atom in the main structure of the polymer, and

(b) the properties of

(i) enhanced expansivity,

(ii) reduced cohesive energy density or

(iii) both (i) and (ii),

thereby allowing more fluid (I) to be dissolved therein.

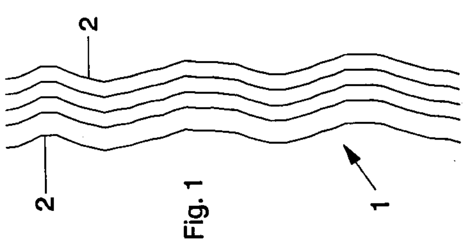


Fig. 1

EP 0 481 431 A2

## RELATED APPLICATION

This application is a continuation-in-part of applicants' copending and commonly assigned U.S. Patent Application S.N. 599,792, filed October 16, 1990.

## BRIEF DESCRIPTION OF THE INVENTION

Transportable pressurized fluid composition containing polymer possessing enhanced expansivity and/or reduced cohesive energy density and a supercritical fluid or near-supercritical fluid which at standard conditions of temperature and pressure is a gas.

## BACKGROUND TO THE INVENTION

Environmental concerns have stimulated the coating industry to find ways to reduce pollution by volatiled organic compounds used as solvents in painting and finishing operations. A great deal of emphasis has been placed on the development of new coating technologies which diminish the emission of organic solvent vapors. A number of technologies have emerged to meet most but not all of the performance and application requirements, and at the same time meet emission requirements and regulations. They are: (a) powder coatings, (b) water-borne dispersions, (c) water-borne solutions, (d) non-aqueous dispersions, and (e) high solids compositions. Each technology has been employed in certain applications and each has found a niche in a particular industry. However, at the present time, none has provided the performance and application properties that was hoped for initially.

Powder application, for example, while providing ultra-low emission of organic vapors, is oftentimes characterized by poor gloss or good gloss with heavy orange peel, poor definition of image gloss, and poor film uniformity. Pigmentation incorporation is often a problem that at times requires milling and extrusion of the polymer-pigment composite mixture followed by cryogenic grinding. In addition, changing colors of the coatings line often requires a complete cleaning because of dust contamination of the application equipment and finishing area.

Water-borne coatings cannot be applied under conditions of high relative humidity without serious coating defects. These defects result from the fact that under conditions of high humidity, water evaporates more slowly than the organic co-solvents of the coalescing aid. As might be expected, in the case of aqueous dispersions, the loss of the organic cosolvent/coalescing aid interferes with film formation resulting in poor gloss, poor uniformity and pin holes. Additionally, water-borne coatins are not as resistant to corrosive environments as are the more conventional solvent-borne coatings.

Coatings applied from organic solvents at high solids avoid many of the pitfalls of powder and water-borne coatings. In these solvent systems, the molecular weight of the polymer is often low and reactive functionality is necessary to crosslink the coating after it has been applied. In reality, there is a limit in the ability of this technology to meet the performance requirements of a commercial coating operation. Present high solids systems are difficult to aply to vertical surfaces without running and sagging of the coating. Often they are prone to cratering and pin-holing. If they have good reactivity they have poor shelf and pot-life; if they have shelf stability then often they cure and/or crosslink slowly of require high temperature and energy to cure.

The use of supercritical fluid as a transport medium for the manufacture of surface coatings is well known. German patent application 28 53 066 describes the use of a gas in the supercritical state as the fluid medium containing the solid or liquid coating substance in the dissolved form. In particular, the application addresses the coating of porous bodies with a protectant or a reactive or nonreactive decorative finish by immersion of the porous body in the supercritical fluid coupled with a pressure drop to effect the coating. The most significant porous bodies are porous catalysts. The applicant characterizes fabrics as porous bodies.

Smith, U.S. 4,582,731, patented April 15, 1986, and U.S. 4,734,450, patented March 29, 1988, describe forming a supercritical solution which includes a supercritical fluid solvent and a dissolved solute of a solid material and spraying the solution to produce a "molecular spray." A "molecular spray" is defined as a spray "of individual molecules (atoms) or very small clusters of the solute." The Smith patents are directed to producing fine films and powders. The films are used as surface coatings.

U.S. Patent Application Serial No. 133,068 and U.S. 4,923,720, to Lee et al., disclose a process and apparatus for the liquid spray application of coatins to a substrate while minimizing the use of the environmentally undesirable organic diluents. The process of the application involves forming a liquid mixture comprising a coating polymer and a supercritical fluid sufficient to render the viscosity of said

mixture suitable for spray application and then spraying the liquid mixture onto a substrate to form a liquid coating. The application and patent describe the addition of at least one organic solvent to the liquid mixture prior to spraying. The preferred supercritical fluid is supercritical carbon dioxide. The process employs an apparatus in which the components of the liquid spray mixture can be blended and sprayed onto an appropriate substrate. The apparatus contains multiple means for supplying at least one polymeric coating compound, for supplying at least one organic solvent and for supplying supercritical carbon dioxide fluid and means for forming a liquid mixture of these components. These means are combined with means for spraying said liquid mixture onto a substrate. The apparatus may contain means for heating any of said components and/or said liquid mixture of components. U.S. Patent Application Serial No. 133,068 and the patent demonstrate the use of supercritical fluid, such as supercritical carbon dioxide fluid, as diluents in highly viscous organic solvent borne and/or highly viscous non-aqueous dispersions coatings compostions to dilute the compositions to application viscosity required for liquid spray techniques. They further demonstrate that the method is generally applicable to all organic solvent borne coatings systems.

European Patent Application 89 112823.3, published January 17, 1990, is directed to a liquid coatings application process and apparatus in which supercritical fluid, such as supercritical carbon dioxide fluid, are used to reduce to application consistency viscous coatings compositions to allow for their application as liquid sprays. The coatings compositions are sprayed by passing the composition under pressure through an orifice into the environment of the substrate.

European Patent Application 89 112856.3, published January 17, 1990, is directed to a process and apparatus for coating substrates by a liquid spray in which 1) supercritical fluid, such as supercritical carbon dioxidde fluid, is used as a viscosity reduction diluent for coating formulations, 2) the mixture of supercritical fluid and coating formulation is passed under pressure through an orifice into the environment of the substrate to form the liquid spray, and 3) the liquid spray is electrically charged by a high electrical voltage relative to the substrate.

The above technologies amply demonstrate the applicability of supercritical fluids as carriers and viscosity reducers for transporting a variety of coating materials and effectively spraying them onto a coatable surface while reducing the amount of volatile organic compounds (VOCs) that are required for the application.

The prior art has not addressed the question of the nature of the attributes a polymer should possess to make supercritical or near supercritical fluids more compatible. It has now been determined that polymer structure is important to the functional capacity of compositions utilizing supercritical or near supercritical fluids. A study of the structure of polymers and their compatibility with supercritical or near supercritical fluids has shown that there are unique advantages to the use of certain polymeric structures in a variety of applications using compositions containing such polymer and supercritical or near supercritical fluids.

Useful polymers for coating and other applications are chains that possess molecular weights, in the case of thermosetting polymers, of at least about 1,000, and in the case of thermoplastic polymers, contain at least about 15 mers per molecule.[1]Most of these polymers contain functionality that is of a type that introduce intramolecular and intermolecular forces of attraction such as the weak bonding forces, ranging from weak ionic bonds to hydrogen bonding to loose van der Waal forces or attractions. These forces can result in close packing of the polymer molecules. Highly crystalline polymers are extreme examples of such polymers and they are characterized by, *inter alias*, considerable solvent resistance. Other of such polymers have lesser levels of intermolecular attractions such that the polymer is not characterized by crystallinity, but nevertheless, they do contain enough attraction that there is close packing between the chains, enough to lower solvent penetration of the polymer.

Intramolecular forces are attractions existing along the individual polymer chain between different kinds of structural units. For example, many useful polymers contain carboxyl and/or carboxylate moieties. Such moieties enter into weak bonding relationships with a variety of other moieties on the same polymer and such result in structural contractions along the chain that preclude solvent penetration to the polymer's backbone. It has been determined that by altering these conventional structural associations, more useful polymeric formulations are attainable which use (or can use) supercritical fluid carriers for the formulations.

## THE INVENTION

This invention is directed to a novel composition comprising a pressurized fluid composition and the process of making them. More particularly, the invention is directed to a transportable polymer-fluid composition comprising

1. A lesser number of mers would cause the structure to be called oligomer.

(I) a dissolved fluid which at standard temperature and pressure of 0° C. and one atmosphere (STP) is a gas; and

(II) a thermoplastic or thermosettable polymer having

(a) a plurality of moieties with the intermolecular disruption characteristics of mono, di or tri substituted fluorine on carbon and mono, di or tri substituted methyl on carbon or silicon, in which said carbon and silicon are a part of, or are directly or indirectly covalently attached to, the skeleton of the polymer's main structure, and are each no more than about 12 covalently bonded atoms from the covalent linkage to an atom in the main structure of the polymer, and

(b) the properties of

(i) enhanced expansivity,

(ii) reduced cohesive energy density or

(iii) both (i) and (ii),

thereby allowing more fluid (I) to be dissolved therein.

The process of this invention relates to pressuring, at a predetermined temperature with mixing, a portion of the thermoplastic or thermosettable polymer with the fluid, as aforedefined, in a closed pressure resistant container until the desired amount of fluid is dissolved in the polymer and a homogeneous composition is produced. The pressure and temperature achieved is sufficient to create a supercritical or near-supercritical fluid of the gas from which it is derived. The selected temperature and pressure is correlated with the critical temperature and pressure of the gas precursor to the fluid.

The compositions of this invention may be used in the manufacture of coatings, adhesives, molded articles, lubricants, release agents, secondary or tertiary oil recovery flow control agents, and the like. The compositions of this invention utilize, in a number of cases, unique polymers which may be provided with certain advantageous properties, such as higher molecular weights and desirable functionality. The compositions allow the use of polymer systems containing minimal concentrations of coalescing agents (as described below) and thereby providing the capability to make many useful and varied polymer containing products (*viz*., coating, adhesives, or molded products, and the like) with minimal evaporation of unwanted VOCs.

## BRIEF DESCRIPTION OF THE DRAWINGS

Figure 1 is a schematic illustration of a traditional commercial polymers with close intermolecular packing.

Figure 2 is a schematic illustration of a polymer with open intermolecular packing.

Figure 3 is pictorial characterization of the relationship of expansivity and cohesive energy density properties of polymers in terms of this invention.

## DETAILED DESCRIPTION OF THE INVENTION

This invention is directed to compositions and processes that provide the combination of thermoplastic or thermosettable polymeric materials (that is, materials which at their use temperatures are solids and typically solid at normal room temperature, viz., 25° C.) in an enhanced compatible relationship with a supercritical or near-supercritical fluid which at STP is a gas. A particularly preferred fluid is $CO_2$. The polymeric material has, by virtue of molecular disruptions along its backbone or pendant to its backbone, a more open chain packing conformation than the more traditional polymer compositions commercially employed or that have been characterized as useful with supercritical or near-supercritical fluids. This allows more supercritical fluid and near-supercritical fluid to enter into solution with the polymer. As a result, the invention provides for solutions that can have lower viscosities and better transportability than conventional polymer compositions containing a supercritical fluid or near-supercritical fluid.

It has been determined that this enhanced compatibility between supercritical fluid transporting systems and organic polymeric compositions are obtained by the inclusion in the polymeric composition, of structural components which introduce an expansive structure in the polymer. A common mode of effecting an expansive polymeric structure is to provide groups that expand the space required for packing the polymeric molecules. This expands the occupied volume of the polymer and thereby allows the supercritical or near-supercritical fluid to more effectively penetrate the interstices between the polymer molecules. The expansive structure may also comprise a function which destabilizes and blocks the formation of coordination and associative structural relationships along the polymer chain. It is the creation of this expansivity, i.e., the expansive structure, that achieves the greater compatibility with the supercritical or near-supercritical fluid, with the polymers of this invention. As a result, the supercritical or near-supercritical fluid

achieves a higher compatibility with the polymer and thereby more effectively increases the fluidity of the transportable polymeric composition.

This complex relationship is better understood by reference to the drawing, comprising Figures 1 and 2. Figure 1 is a schematic illustration of polymer molecules 1 each containing a plurality, typically symmetrically distributed, stabilized (or closely packed) structures 2. The stabilized structures 2 comprise flexible molecules in which associations or coordinations exist such as hydrogen bonding effects, van der Waal forces, and other weak bonding forces, that serve to attract coexisting polymer molecules to themselves and thus preclude or block penetration of the supercritical or near-supercritical fluid into the polymer. This effect is not unlike the solvent preclusion effects caused by crosslinked or hard segment portions within a polymer structure. Figure 2 shows the same kind of polymer in which the stabilized polymers are destabilized, i.e., opened, into a plurality of destabilized polymers chain 3 comprising destabilizing pendant units 5. On Breaking up of the stabilized chains, the supercritical or near-supercritical fluid is allowed to penetrate the polymer and such enhances the compatibility of the fluid for the polymer and the polymer for the fluid. The result is a lower viscosity solution of the polymer. Destabilization comprises two factors. One involves altering the distance between the polymer molecules and thereby allowing the supercritical fluid to penetrate into the expanded polymer. The other is to lower the attraction of the polymer molecules for themselves. This too allows the supercritical fluid to penetrate into the polymer. Because of the supercritical fluid's attributes of both a liquid and gas, it has the potential for degrees of penetrability into the molecular structure of the polymer that would not occur for a conventional liquid solvent/diluent. For example, the diffusivity of supercritical carbon dioxide is approximately one hundred times greater than a conventional liquid solvent/diluent. Consequently, this invention provides the potential for magnitudes of solvency not contemplated by the standards of the art.

The known term "expansivity" ("$E_x$"), as used herein, is defined by the equation

$$E_x = -\beta = -\frac{1}{v}\left(\frac{\partial v}{\partial P}\right)_T$$

wherein

$\beta$ = compressibility of the polymer
v = specific volume (in units such as cc/gm)
P = pressure (in units such as Bars)
T = temperature in °C.

Expansivity can be determined by one or more of the following techniques: (a) measuring compressibility of the pure polymer in the amorphous state; (b) measuring compressibility of polymer in solvent; (c) measuring swelling of polymer by carbon dioxide; or (d) measuring partial molar volume of carbon dioxide in the polymer.

The known term "cohesive energy density" ("CED"), as used herein, is defined by the equation

$$CED = \frac{\Delta E}{V_m}$$

wherein

$V_m$ = molar volume (in units such as cc/mol)
$\Delta E$ = Internal energy (in units such as calories)

Cohesive energy density is calculated from the solubility parameter of the polymer, which can be determined by the following techniques: (a) measuring

intrinsic viscosity of a polymer dissolved in a solvent as a function of solubility parameter of solvent; (b) using reverse phase HPLC; (c) measuring solubility in a number of solvents; or (c) estimated from correlations.

The cohesive energy density of carbon dioxide under supercritical conditions is defined similarly, except that its calculation uses the internal energy of the supercritical gas relative to an isothermally

expanded ideal state. According to *Allada*,[2]

$$CED = \frac{(E^* - E)}{V_m}$$

wherein

$V_m$ = molar volume (in units such as cc/mol) of the supercritical or dense gas at temperature T and pressure P,

E = Internal energy (in units such as calories)

$E^*$ = the internal energy of the gas isothermally expanded to "zero" pressure where intermolecular separation is infinite and the intermolecular forces are zero.

## The Polymers

The polymer compositions of the invention comprise generic classes of polymers that are typically organic and are derived from a variety of sources, natural and synthetic. For example, the polymers may come from natural cellulosic materials, proteins (polypeptides and glycoproteins), natural rubber, various natural resins and resinous oils, the fatty acid glycerides, and the like materials. The greater preponderance of the polymers we derived synthetically, and the myriad classes of useful polymeric materials are essentially unlimited. Typically useful classes of synthetic polymers for use in the invention include, by way of example, addition polymers and condensation polymers (including those obtained by ring-opening reactions and through isocyanate addition reactions). Illustrative of the addition polymers are those derived from acrylates (including methacrylates) and other conjugated carbonyl containing structures (viz., maleic acid, anhydride and esters, fumaric acid and esters, acrolein, methacrolein, methyl vinyl ketone, and the like), vinyls (viz., styrene, vinyl chloride, vinyl acetate, vinyl propionate, vinyl pivalate, etc.), epoxides, isocyanates, olefins (including alpha-olefins), allyl compounds, and the like. Illustrative of the condensation polymers are those based on the condensation reaction between polycarboxylic acids, anhydrides, esters and/or halides with polyols, polyamines, polymercaptans, and the like, phenolic compositions based on the reaction of phenolic compounds and aldehydes (such as formaldehyde), amine-aldehyde resins (such the reaction product of melamine or urea with formaldehyde), the reaction product of polycarboxylic acids, anhydrides, esters with fatty acid polyglycerides, or the hydrogenated alcohols of such glycerides, to form alkyd resins, epoxide reaction products and polyurethanes.

The wide assortment of polymers useful in the compositions of the invention are those that contain moieties providing sufficient intermolecular disruption so as that they exhibit the properties of enhanced expansivity, reduced cohesive energy density of both properties. The consequence of these properties is that larger amounts of the supercritical or near-supercritical fluid are soluble in the polymer. This results in a composition possessing higher concentrations of solubilized fluid in the polymer. Figure 3 shows a graph charting the preferred polymers of the invention in terms of these properties. Quadrant (4) depicts the characteristics for many of the traditional industrial polymers, especially those depicted in the prior art to be used in combination with supercritical fluids. As the properties of the polymers are altered by inclusion in their structure of components which lower the polymer's CED and/or increase its expansivity, the polymer's characteristics are then depicted by quadrants (1) through (3). Polymers having CED's and expansivity characteristics pulling them into quadrant (1) are most preferred, the other two quadrants yielding somewhat less preferred polymers.

As pointed out above, the polymers may be thermoplastic or thermosettable. Suitable polymers of both types are the condensation (including the ring opening polymerized types and urethane) and/or addition polymers. The condensation polymers may include polyesters, polyurethanes, polyamides, polysiloxanes, polyformals, polyoxy methylenes, and the like. The addition polymers may include acrylics, vinyls, olefins, and the like. The ring opening polymers include epoxides, polyoxy ($C_{1+}$) alkylenes, and the like. The class of polymer is not critical in the selection of the polymer. At issue is the polymer's structure, regardless of class, and its consequent capacity to solubilize with the supercritical or near-supercritical fluid.

As pointed out above, the polymer has a solubilizing effect on the supercritical fluid and near-supercritical fluid caused by intermolecular disruption within the polymer's molecules. In terms of this

2. Allada, "Solubility Parameters of Supercritical Fluids," Ind. Eng. Chem. Process Des. Dev., 1984, 23, 344-348.

invention, that disruption is provided by one or more moieties with the disruption characteristics of mono, di or tri substituted fluorine on carbon and mono, di or tri substituted methyl on carbon or silicon in which said carbon and silicon are directly or indirectly covalently attached to the skeleton of the polymer's main structure and is no more than about 12 covalently bonded atoms from the covalent linkage to an atom in the main structure of the polymer. The invention is directed to the application of such intermolecular disruptions and not limited to the means by which such is accomplished. Experimental evidence shows that certain kinds of moieties achieve the quality of intermolecular disruption such that more supercritical fluid or near-supercritical fluid are allowed to penetrate into the polymer. Demonstrative of the diversity of these structures, which are directly or indirectly chemically bound to the polymer backbone, are the following:

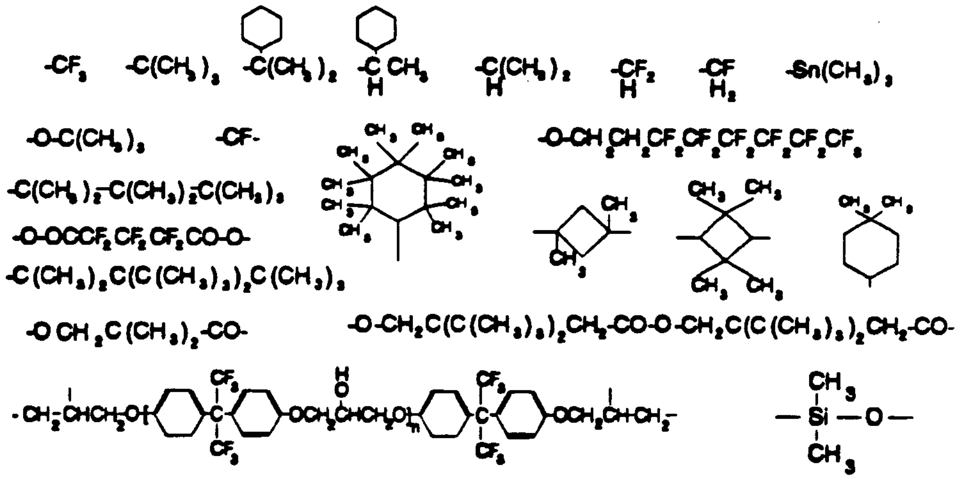

The diversity of polymeric structural components that may be included in achieving the compositions of the invention may be included in homopolymers and copolymers whether the polymers are obtained by way of addition and/or condensation reactions. In the typical case, the polymers are produced by use of conventional polymerization reaction techniques, and no claim is made herein to processes for making the polymers except in those cases where the polymer is made *in situ* in the course of the use of the polymeric compositions of the invention.

The addition polymers are prepared by the polyaddition reactions of ethylenically unsaturated monomers, and the polymerization reactions can be induced by free radical forming or ionic reagents. The free radical polymerizations are carried out in the bulk phase or in solution. A chain transfer agent can be used to control the molecular weight of the polymer. The number average molecular weight of the acrylic polymers is determined by gel permeation chromatography using polystyrene as a standard.

A typical procedure involves feeding the ethylenically unsaturated monomer(s), altered by inclusion in their structure components which lower the polymer's CED and/or increase its expansivity, so that the polymer's CED and/or expansivity moves into quadrants (1) through (3) of Figure 3. Polymers having CED's and expansivity pulling them into quadrant (1) are most preferred, the other two quadrants yielding preferred polymers, but not as preferred.

A typical procedure involves feeding the ethylenically unsaturated monomer(s) and optionally, a chain transfer agent, to a polymerization reactor containing solvent. The free radical initiator, dissolved in solvent, is fed separate from the monomer(s) to the polymerization reactor. The mixture is heated to about 80°-160°C. for 1-6 hours, followed by a cook-out period of 1-3 hours. Also, if required, after the polymerization is completed, solvent can be evaporated to increase the solids content of the resulting polymer solution.

A wide variety of solvents can be utilized to prepare the addition polymers. Suitable solvents are methyl ethyl ketone, methyl isobutyl ketone, methyl n-amyl ketone, ethyl acetate, butyl acetate, butyl propionate, pentyl propionate, ethyl 3-ethoxypropionate, ethylene glycol monoethylether acetate, propylene glycol monomethylether acetate, toluene, and other ketones, esters, ethers, and hydrocarbon solvents.

About 1-5% by weight, based on the weight of the monomers, of initiator is used to prepare the addition polymers. Suitable free radical initiators are azo-bisisobutylnitrile, azo-bis($\gamma$-dimethyl valeronitrile), tertiary-butyl peroxybenzoate, di-t-butyl peroxide, benzoyl peroxide, and the like.

A chain transfer agent can be used to control the molecular weight of the addition polymer. About 1-8 moles of chain transfer agent per 100 moles of monomer can be used. Typical chain transfer agents are 2-mercaptoethanol, 3-mercaptopropanol, butyl mercaptan, lauryl mercaptan, butyl 3-mercaptopropionate, and the like.

Particularly preferred ethylenically unsaturated monomers that can be either homopolymerized or copolymerized with other ethylenically unsaturated monomers to yield polymers with enhanced solubility in supercritical carbon dioxide contain fluoro substituted moieties, branched alkyl (preferably tertiary alkyl) moieties, and methyl substituted silyl moieties.

Typical ethylenically unsaturated monomers containing fluorine that can be used to prepare addition polymers are: monotrifluoroethyl itaconate, bis-trifluoroethyl itaconate, monotrifluoroethyl maleate, 2,2,2-trifluoroethyl methacrylate, hexafluoroisopropyl methacrylate, pentadecafluorooctyl methacrylate, 2,2,3,3,3-pentafluoro propyl acrylate, perfluorooctyl methacrylate, 1,1,2,2-tetrahydro perfluorodecyl methacrylate, 1,1,2,2-tetrahydro perfluoroundecyl acrylate, trihydro perfluoroheptyl acrylate, vinyl trifluoroacetate, vinyl heptafluorobutyrate, pentafluorostyrene, tetrafluoroethylene, hexafluoropropylene, vinylidene fluoride, vinyl fluoride, chlorotrifluoroethylene, perfluoropropyl vinyl ether, and the like.

Specific illustrations of ethylenically unsaturated monomers containing fluorine are the following in which the fluorine are bonded to non-carbonyl containing carbon atoms:

$CH_2 = CH(CH_3)COOCH_2CF_3$
$CH_2 = CHCOOCH_2(CF_2)_{1-12}CF_3$
$CH_2 = CHO(CH_2)_{1-12}(CF_2)_{1-2}CF_3$
$CH_2 = CH(CH_3)COO(CH_2)_{1-12}CClFCF_2CF_2CF_3$

Typical ethylenically unsaturated monomers containing silicon that can be used to prepare addition polymers are:
3-acryloxypropylmethylbis(trimethylsiloxy)silane,
3-methacryloxypropylpentamethyl-disiloxane,
3-methacryloxypropyltris(trimethylsiloxy)silane,
2-(trimethylsiloxy)ethyl methacrylate,
vinyl trimethylsilane,
vinyl diethylmethylsilane,
and the like.

Ethylenically unsaturated monomers containing quaternary carbon atoms that can be used to prepare addition polymers are: vinyl pivalate, vinyl 2,2-dimethylbutanoate, 2,2-dimethylpropyl methacrylate, 2,2-dimethylbutyl methacrylate, and the like.

The intermolecular disrupting monomers can be copolymerized with a variety of other ethylenically unsaturated monomers to yield addition polymers with enhanced solubility in supercritical and near-supercritical carbon dioxide fluid. Typical ethylenically unsaturated monomers that can be used are: methyl methacrylate, ethyl acrylate, butyl methacrylate, butyl acrylate, 2-ethylhexyl acrylate, 2-ethylhexyl methacrylate, lauryl methacrylate, isodecyl acrylate, isobornyl acrylate, hexyl methacrylate, stearyl acrylate, styrene, acrylonitrile, methacrylonitrile, acrylamide, N-alkyl and N,N-dialkyl substituted acrylamides and methacrylamides such as N-methylacrylamide, N,N-dimethylacrylamide, N-methylmethacrylamide, N,N-dimethyl methacrylamide, and the like, N-vinylpyrrolidone; and the alkyl substituted N-vinyl pyrrolidones, e.g., methyl substituted N-vinylpyrrolidone, the allyl amines, vinyl chloride, vinyl acetate, vinyl propionate, vinyl 2-ethylhexanoate, vinyl neononanoate, and the like.

Functional monomers can also be copolymerized with the above ethylenically unsaturated monomers to prepare addition polymers for use in thermoset coatings. Illustrative monomers include monoesters of acrylic acid or methacrylic acid and an alcohol having at least one additional hydroxyl group such as the mono- and polyalkylene glycols. Illustrative of these are ethylene glycol monomethacrylate, ethylene glycol monoacrylate, diethylene glycol monomethacrylate, diethylene glycol monoacrylate, propylene glycol monomethacrylate, propylene glycol monoacrylate, dipropylene glycol monoacrylate, and the like. Other functional monomers that can be used include acrylic acid, methacrylic acid, 3-methacryloxypropyltrimethoxysilane, N-(isobutoxymethyl)-acrylamide, glycidyl methacrylate and acrylate, and the like.

The polymers of the invention may include a minor proportion of di - or polyfunctional species such as: divinylbenzene, ethylene glycol diacrylate or dimethacrylate, propylene glycol diacrylate or dimethacrylate, and the acrylate or methacrylate esters of the following polyols: diethanolamine, triethanolamine, glycerol, pentaerythritol, butylene glycol, diethylene glycol, triethylene glycol, tetraethylene glycol, mannitol, sorbitol, and the like. Other crosslinking monomers can be employed, such as N,N-methylene-bis-acrylamide or methacrylamide, sulfonated divinylbenzene, and divinylsulfone.

Polymerization of the monomer or prepolymer material can also be effected using, for example,

radiation (U.V., X-ray, microwave, or other well-known forms of radiation) with/without the presence of well-known initiator(s) and/or catalyst(s).

When using radiation as the catalyst in the polymerization process, the monomer compostions may be mixed with the gas precursor to the supercritical or near-supercritical fluid and the mixture fed under suitable supercritical fluid or near-supercritical fluid conditions into a polymerization column (tube), typically fabricated from a material that will not impede the transmission of the radiation into the polymerization zone of the column. Glass, such as Pyrex, would be a suitable material for the polymerization column when using long wave U.V. radiation as the catalyst. When using other types of catalysts as recited above, the polymerization column could be fabricated from various types of metals such as steel, nickel, bronze, various alloys, and the like. Polymerization can be *in situ* generated to provide the polymers and compositions of the invention.

With respect to condensation and ring-opening polymerization, there are a variety of polymers suitable for this invention. For example, fluorinated polyesters and epoxides, and polyesters and epoxides with methyl substituted quaternary carbon atoms (especially trimethyl substituted quaternary carbon atoms), are desirable in the practice of the invention.

Particularly desirable are the fluorinated condensation polymers derived from the reaction of a polyfunctional monomer containing fluorine that condenses with one or more other monomers, or with itself, to generate a condensation polymer. As with the addition polymers, the condensation polymers may be thermoplastic or thermosettable. Particularly desirable monomers are those which possess the following unit formula within the main structure:

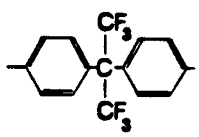

Another particularly desirable structural component in condensation polymers and ring opening polymers used in the polymeric compositions of the invention are the essentially perfluoronated aliphatic moieties where the fluorine is bonded to non-carbonyl carbon atoms, such as:

$-(CF_2)_x-$

wherein x is at least 2 and typically not greater than 12. Such units can be part of a polyol, a polyamine, a polyisocyanate, a polyepoxide, a polycarboxylic acid, a polymercaptan, and the like. In the typical case, it is not as desirable to use perfluorinated coreactants. The more preferred case utilizes one perfluorinated monomer reactant with another free of such perfluorination.

The invention is directed to the use of supercritical fluids in transporting high polymeric solids compositions in confined areas or volumes. The most preferred use of the invention is the spray application of the high polymeric solids composition to a solid substrate.

Particularly desirable polymers in the practice of the invention are those which are commonly used in coating applications or which can be modified for use in coating applications. Prime applications for the compositions of the invention are for depositing coatings onto a substrate. Noted above is the improved compatibility of the polymer for the supercritical fluid and near-supercritical fluid. This makes the transportable compostions extremely desirable for coating applications and the use of the polymers as coatings. It is known that the incorporation of reactive functional groups, such as hydroxyl, carboxyl, isocyanato, and the like, into the polymer structure contribute to improved performance in a cured polymer. To form films that have acceptable physical properties from relatively low molecular weight acrylic polymers, the polymers generally have a hydroxyl content that is about two to three times higher than acrylic polymers used for conventional thermosetting compostions. The higher hydroxyl content provides additional crosslinking sites and films are formed that have excellent physical properties that are equivalent to and often better than films from conventional thermosetting acrylic compostions. The properties of the coating can also be improved by increasing the molecular weight of the polymer. Increased functionality and increased molecular weight, while contributing to improved performance, such as toughness and durability, detracts from the compatibility of the supercritical fluid or near-supercritical fluid to the polymer. This invention provides a mechanism for minimizing these negative effects. Incorporating the intermolecular disruptive moieties into the polymer structure enhances compatibility and thus essentially negates the adverse compatibility effect previously seen with functionality and increased molecular weight. As a result, the

invention allows for the use of functionally rich higher molecular weight polymers to achieve coatings with superior performance to what was otherwise attainable according to the prior art, without loss of compatibility of the supercritical fluid or near-supercritical fluid to the polymer.

The following table A correlates data from the examples below to demonstrate this point:

Table A

| Example | IMD* | Reactive Function | $M_n$ | Viscosity ~60% Solids in Pentyl Propionate | Weight % $CO_2$ at normalized saturation point | Change in weight % $CO_2$ at normalized saturation point |
|---|---|---|---|---|---|---|
| 1 | 0 | 0 | 2,331 | 129 | 42.2 | 0 |
| 2 | 0 | 0 | 3507 | 242 | 41.2 | -1 |
| 3 | 0 | 0 | 4,618 | 846 | 39.4 | -2.8 |
| 4 | 0 | 0 | 11,532 | 3,540 | 38.6 | -3.6 |
| 5 | 0 | 15% -OH monomer | 2,370 | 188 | 40.0 | -2.2 |
| 6 | 0 | 15% -COOH monomer | 1,469 | 1,630 | 31.8 | -10.4 |
| 7 | 15% FMA | 0 | 2,450 | 92 | 47.3 | 5.1 |
| 8 | 30% TSM | 0 | 2,388 | 102 | 48.5 | 6.3 |
| 9 | 30% MPTS | 0 | 2,757 | 70 | 49.7 | 7.5 |
| 19 | 25% FMA | 15% -OH monomer | 2,998 | 377 | 44.5 | 2.3 |

*IMD refers to the intermolecular disruptive moiety included in the polymer.

The invention contemplate the use of coalescing agents in the polymer composition where there is a need for solvating or plasticizing the polymer when it is removed from the composition and dissassociated from the supercritical fluid or near-supercritical fluid. Solvents, such as those described above, and conventional plasticizers may be incorporated into the composition of the invention for assisting in the application of the polymer from association with the supercritical fluid and near-supercritical fluid.

The invention encompasses viscosity reduction by the dissolution of a supercritical fluid in the polymer composition or the dispersion and suspension of a mixture of the composition and the supercritical fluid.

The supercritical fluid phenomenon is well documented, see pages F-62 - F-64 of the CRC Handbook of Chemistry and Physics, $67^{th}$ Edition, 1986-1987, published by the CRC Press, Inc., Boca Raton, Florida. At high pressures above the critical point, the resulting supercritical fluid, or "dense gas", will attain densities approaching those of a liquid and will assume some of the properties of a liquid. These properties are dependent upon the fluid composition, temperature, and pressure.

The compressibility of supercritical fluids is great just above the critical temperature where small changes in pressure result in large changes in the density of the supercritical fluid. As noted in the art, the "liquid-like" behavior of a supercritical fluid at higher pressures results in greatly enhanced solubilizing capabilities, with higher diffusion coefficients and an extended useful temperature range compared to liquids. Compounds of high molecular weight can often be dissolved in the supercritical fluid at relatively low temperature in those cases where the supercritical fluid is used in large solvent-like concentrations. An interesting phenomenon associated with supercritical fluids is the occurrence of a "threshold pressure" for solubility of a high molecular weight solute. As the pressure is increased, the solubility of the solute will often increase by many orders of magnitude with only a small pressure increase.

Near-supercritical liquids also demonstrate solubility characteristics and other pertinent properties similar to those of supercritical fluids. The solute may be a liquid at the supercritical temperatures, even though it is a solid at lower temperatures. In addition, it has been demonstrated that fluid "modifiers" can often alter supercritical fluid properties significantly, even in relatively low concentrations, greatly increasing solubility for some solutes. These variations are considered to be within the concept of a supercritical fluid as used in the context of this invention. Therefore, as used herein, the phrase "supercritical fluid" denotes a compound above, at, or slightly below the critical temperature and pressure of that compound.

Examples of compounds which are known to have utility as supercritical fluids are given in Table B.

Table B

| EXAMPLES OF SUPERCRITICAL SOLVENTS | | | | |
|---|---|---|---|---|
| Compound | Boiling Point (°C) | Critical Temperature (°C) | Critical Pressure (atm) | Critical Density (g/cm$^3$) |
| $CO_2$ | -78.5 | 31.3 | 72.9 | 0.448 |
| $NH_3$ | -33.35 | 132.4 | 112.5 | 0.235 |
| $H_2O$ | 100.00 | 374.15 | 218.3 | 0.315 |
| $N_2O$ | -88.56 | 36.5 | 71.7 | 0.45 |
| Xenon | -108.2 | 16.6 | 57.6 | 0.118 |
| Krypton | -153.2 | -63.8 | 54.3 | 0.091 |
| Methane | -164.00 | -82.1 | 45.8 | 0.2 |
| Ethane | -88.63 | 32.28 | 48.1 | 0.203 |
| Ethylene | -103.7 | 9.21 | 49.7 | 0.218 |
| Propane | -42.1 | 96.67 | 41.9 | 0.217 |
| Pentane | 36.1 | 196.6 | 33.3 | 0.232 |
| Methanol | 64.7 | 240.5 | 78.9 | 0.272 |
| Ethanol | 78.5 | 243.0 | 63.0 | 0.276 |
| Isopropanol | 82.5 | 235.3 | 47.0 | 0.273 |
| Isobutanol | 108.0 | 275.0 | 42.4 | 0.272 |
| Chlorotrifluoromethane | -31.2 | 28.0 | 38.7 | 0.579 |
| Monofluoromethane | -78.4 | 44.6 | 58.0 | 0.3 |
| Cyclohexanol | 155.65 | 356.0 | 38.0 | 0.273 |

Many other supercritical compounds are cited in the aforementioned CRC Handbook of Chemistry and

Physics, *supra.*

Due to the low cost, low toxicity and low critical temperature of carbon dioxide, supercritical carbon dioxide fluid is preferably used in the practice of the present invention. For many of the same reasons, nitrous oxide ($N_2O$) is a desirable supercritical fluid in the practice of the present invention. However, use of any of the aforementioned supercritical fluids and mixtures thereof are to be considered within the scope of the present invention.

The art has treated the solvency of supercritical carbon dioxide as similar to that of a lower aliphatic hydrocarbon and, as a result, one can consider supercritical carbon dioxide as a replacement for a hydrocarbon solvent.[3] In addition to the environmental benefit of replacing hydrocarbon solvents with supercritical carbon dioxide, there is a safety benefit also, because carbon dioxide is nonflammable and nontoxic.

EXAMPLE 1

A two liter round-bottomed flask equipped with a mechanical stirrer, thermometer, Friedrichs condenser with a nitrogen inlet, and two feed adaptors was charged with 100 grams of pentyl propionate. The solvent was heated to 160° C. and the temperature was controlled with a Therm-O-Watch. A monomer mixture of 141 grams of methyl methacrylate and 159 grams of butyl acrylate was fed via a piston pump to the flask over a four hour period. Over the same time period, a mixture of 11.0 grams of tertiary-butyl peroxybenzoate dissolved in 70.0 grams of pentyl propionate was fed to the flask via a second piston pump. After all the feeds were added, the monomer line was flushed with 15.0 grams of pentyl propionate and the reaction mixture was allowed to cook out for thirty minutes at 150° C. Then 1.0 gram of tertiary-butyl peroxybenzoate dissolved in 15.0 grams of pentyl propionate was fed to the flask and the reaction mixture was heated an additional two hours at 150° C. The resulting acrylic copolymer, at 59% weight solids, had a Brookfield viscosity of 129 centipoises at 25° C. Molecular weight determination by Gel Permeation Chromatography (GPC) using polystyrene as the reference gave $M_n = 2331$, $M_w = 4339$, and a polydispersity of 1.9.

EXAMPLE 2

Same as example 1, except the monomer mixture consisted of 15.0 grams of 1,1,2,2-tetrahydroperfluorodecyl methacrylate (FMA), 134 grams of methyl methacrylate, and 151 grams of butyl acrylate and the reaction temperature was 150° C. The resulting terpolymer, at 58% weight solids, had a Brookfield viscosity of 98 centipoises at 25° C. Molecular weight determination by GPC gave $M_n = 2260$, $M_w = 5121$, and a polydispersity of 2.3.

EXAMPLE 3

Same as example 2, except the monomer mixture consisted of 45.0 grams of FMA, 119.8 grams of methyl methacrylate, and 135.2 grams of butyl acrylate. The resulting terpolymer, at 57% weight solids, had a Brookfield viscosity of 92 centipoises at 25° C. Molecular weight determination by GPC gave $M_n = 2450$, $M_w = 5228$, and a polydispersity of 2.1.

EXAMPLE 4

Same as example 2, except the monomer mixture consisted of 75.0 grams of FMA, 105.8 grams of methyl methacrylate, and 119.2 grams of butyl acrylate. The resulting terpolymer, at 55% weight solids, had a Brookfield viscosity of 57 centipoises at 25° C. Molecular weight determination by GPC gave $M_n = 2431$, $M_w = 5070$, and a polydispersity of 2.1.

EXAMPLE 5

Same as example 2, except the monomer mixture consisted of 150.0 grams of FMA, 70.5 grams of methyl methacrylate, and 79.5 grams of butyl acrylate. The resulting terpolymer, at 55% weight solids had a

3. However, this statement of an alleged equivalency cannot be extended across the board. As pointed out by McHugh et al., Supercritical Fluid Extraction, Butterworths (publisher) Boston, M.A., (1986), at pages 156-7, a fluid fluoroalkyl ether polymer exhibits better solubility in supercritical carbon dioxide than in hexane.

Brookfield viscosity of 52 centipoises at 25° C. Molecular weight determination by GPC gave $M_n = 2043$, $M_w = 3877$, and a polydispersity of 1.9.

EXAMPLE 6

Same as example 2, except the monomer mixture consisted of 300 grams of FMA.

EXAMPLE 7

Same as example 2, except the monomer mixture consisted of 90.0 grams of 3-methacryloxypropyltrimethoxysilane (A-174), 98.7 grams of methyl methacrylate, and 111.3 grams of butyl acrylate. The resulting terpolymer, at 56% weight solids, had a Brookfield viscosity of 148 centipoises at 25° C. Molecular weight determination by GPC gave $M_n = 1308$, $M_w = 6953$, and a polydispersity of 5.3

EXAMPLE 8

Same as example 2, except the monomer mixture consisted of 90.0 grams of 3-methacryloxypropyltris-(trimethylsiloxy)silane (MPTS), 98.7 grams of methyl methacrylate, and 111.3 grams of butyl acrylate. The resulting terpolymer, at 58% weight solids, had a Brookfield viscosity of 70 centipoises at 25° C. Molecular weight determination by GPC gave $M_n = 2757$, $M_w = 6370$, and a polydispersity of 2.3.

EXAMPLE 9

Same as example 2, except the monomer mixture consisted of 98.7 grams of methyl methacrylate, 111.3 grams of butyl acrylate, and 90.0 grams of (trimethylsilylmethyl)methacrylate (TSM). The resulting terpolymer, at 57% weight solids, had a Brookfield viscosity of 102 centipoises at 25° C. Molecular weight determination by GPC gave $M_n = 2388$, $M_w = 6335$, and a polydispersity of 2.6.

EXAMPLE 10

Similar to example 1, except the flask was charged with 100 grams of propylene glycol monomethylether acetate. The monomer feed consisted of 300 grams of vinyl acetate, the initiator feed consisted of 4.8 grams of azo-bisisobutyronitrile (AIBN) dissolved in 70.0 grams of propylene glycol monomethylether acetate, and the reaction temperature was 115° C. After completing the feeds and a thirty minute cookout, 0.5 grams of AIBN dissolved in 15.0 gram propylene glycol monomethylether acetate was fed to the flask, and the reaction mixture was heated an additional two hours at 115° C. The resulting vinyl polymer, at 57% weight solids, had a Brookfield viscosity of 501 centipoises at 25° C. Molecular weight determination by GPC gave $M_n = 3120$, $M_w = 7156$, and a polydispersity of 2.3.

EXAMPLE 11

Same as example 10, except the monomer feed consisted of 300 grams of vinyl pivalate. The resulting vinyl polymer, at 59% weight solids, had a Brookfield viscosity of 249 centipoises at 25° C. Molecular weight determination by GPC gave $M_n = 2765$, $M_w = 5270$, and a polydispersity of 1.9.

EXAMPLE 12

Same as example 10, except the monomer feed consisted of 300 grams of vinyl neononanoate. The resulting vinyl polymer, at 59% weight solids, had a Brookfield viscosity of 252 centipoises at 25° C. Molecular weight determination by GPC gave $M_n = 2638$, $M_w = 5241$, and a polydispersity of 2.0.

EXAMPLE 13

A one liter round-bottomed flask equipped with a mechanical stirrer, thermometer, Friedrichs condenser, nitrogen sparger, and an addition funnel was charged with 234.2 grams of Shell's Epon resin 829 (bisphenol A diglycidyl ether and catalyst) and 65.8 grams of bisphenol A (Bis-A). Controlling the temperature with a Therm-O-Watch, the mixture was heated to 110° C., and a slight exothermic reaction occurred. The temperature was gradually increased to 176° C., and the reaction mixture was held at this temperature for

forty-five minutes. The mixture was then cooled to 130°C. and 200 grams of toluene was added dropwise via an addition funnel. The resulting bisphenol A resin, at 59% weight solids, had a Brookfield viscosity of 264 centipoises at 25°C. Molecular weight determination by GPC gave $M_n = 803$,$M_w = 2594$, and a polydispersity of 3.2.

EXAMPLE 14

Same as example 13, except the flask was charged with 221.1 grams of Epon resin 829 and 84.2 grams of 2,2-bis(4-hydroxyphenyl)hexafluoropropane (Bis-AF). The resulting fluorinated bisphenol A resin, at 59% weight solids, had a Brookfield viscosity of 244 centipoises at 25°C. Molecular weight determination by GPC gave $M_n = 663$, $M_w = 2582$, and a polydispersity of 3.9.

EXAMPLE 15

Same as example 13, except the flask was charged with 216.7 grams of Epon resin 829 and 105.8 grams of bisphenol A, and the reaction temperature was held at 176°C. for ninety minutes. After cooling to 140°C., a mixture of 215 grams of xylene and 100 grams of propylene glycol monomethylether acetate was added to the flask via the addition funnel. The resulting bisphenol A resin, at 50% weight solids, had a Brookfield viscosity of 1670 centipoises at 25°C. Molecular weight determination by GPC gave $M_n = 4163$, $M_w = 8292$, and a polydispersity of 2.0.

EXAMPLE 16

Same as example 15, except the flask was charged with 178.6 grams of Epon resin 829 and 125.3 grams of Bis-AF. Alter cooling to 140°C., a mixture of 235 grams of xylene and 117.5 grams of propylene glycol monomethylether acetate was added to the flask via the addition funnel. The resulting fluorinated bisphenol A resin, at 50% weight solids, had a Brookfield viscosity of 2720 centipoises at 25°C. Molecular weight determination by GPC gave $M_n = 6315$, $M_w = 16639$, and a polydispersity of 2.6.

EXAMPLE 17

A half-liter round-bottomed flask equipped with a mechanical stirrer, thermometer, distillation head with a condenser, and nitrogen sparger was charged with 150.0 grams of diethyl glutarate, 79.0 grams of 1,4-butanediol, and 0.5 grams of dibutyl tin oxide. Under a nitrogen sparge, the mixture was heated to 160°C., and maintained at that temperature for two hours. The reaction temperature was then slowly raised to 220°C., and held at that temperature until no more ethanol distilled overhead. The resulting polyester, a white waxy solid, had a hydroxyl equivalent weight of 1212.

EXAMPLE 18

The procedure was the same as used in Example 17, except the charge consisted of 150.0 grams of diethyl hexafluoroglutarate, 50.2 grams of 1,4-butanediol, and 0.4 grams of dibutyl tin oxide. During the reaction, a small quantity of tetrahydrofuran was also generated from cyclization of 1,4-butanediol. The resulting polyester was a clear, amber-colored liquid.

EXAMPLE 19

Using the conditions of Example 1, except the monomer mixture contained 84.6 grams methyl methacrylate, 94.5 grams butyl acrylate, 45 grams 2-hydroxyethyl acrylate, and 75 grams FMA, and the initiator feed comprised 11 grams tertiary-butylperoxy benzoate in 70 grams pentyl propionate. The reaction temperature was 135°C. and the post initiator contained 1 gram tertiary-butylperoxy benzoate in 15 grams pentyl propionate.

The resulting copolymer, at 58% weight solids, had a Brookfield viscosity of 377 centipoises at 25°C. Molecular weight determination by GPC gave $M_n = 2998$, $M_w = 12{,}483$ and a polydispersity of 4.164. The copolymer had a $CO_2$ saturation point of 44.5% at 1600 psi and 60°C.

The solubility of $CO_2$ in the polymers of the Examples were determined using a pressure cell of the design depicted by ***McHugh et al., supra,*** at pages 73-76, except that the view cell had a volume of 260 ml and was heated with cartridge heaters. A known amount of polymer material and $CO_2$ were added to the

view cell ant eht pressure of the cell was isothermally increased until all of the polymer was solubilized. At this point, a clear, single fluid phase was present in the view cell. The mixture was then slowly decompressed until its clarity changed from clear to cloudy. At this point, two phases existed in the cell and this pressure was recorded. At higher $CO_2$ concentrations, the transition between the one-phase and two-phase region is called a white point. A white point is defined as the condition at which the contents of the view cell turn white (opaque) and remain white as the pressure is reduced further. When a mixture undergoes a white point, it is said to be saturated with $CO_2$. These physical phenomena are characterized by *McHugh et al., supra,* at page 75. Saturation points were determined for several $CO_2$ concentrations, then normalized to 1,600 psi to allow comparison to be made between various polymers and the results are set forth in the following tables.

TABLE 1

| Fluorinated Acrylic Polymers Effect of Fluorine Content on $CO_2$ Solubility | | | |
|---|---|---|---|
| Example Number | Polymer Composition | CED | Weight % $CO_2$ at 1600 psi and 60 ° C. |
| 1 | 47%MMA/53%BA | 92.5 | 43.2 |
| 2 | 5%FMA/45%MMA/50%BA | 86.1 | 45.1 |
| 3 | 15%FMA/40%MMA/45%BA | 75.7 | 47.3 |
| 4 | 25%FMA/35%MMA/40%BA | 67.6 | 52.0 |
| 5 | 50%FMA/23.5%MMA/26.5%BA | 53.1 | 57.0 |
| 6 | 100%FMA | 37.8 | 62.9 |

The next table demonstrates the effect on $CO_2$ solubility in the polymer as the polymer solution is concentrated by evaporation of solvent. The table shows the results using the polymers from Examples 4 and 6.

TABLE 2

| Fluorinated Acrylic Polymers Effect of Solids Level on $CO_2$ Solubility | | | |
|---|---|---|---|
| Example Number | Polymer Composition | Weight % $CO_2$ at 1600 psi and 60 ° C. | Percent Total Solids |
| 4 | 25%FMA/35%MMA/40%BA | 52.0 | 55.02 |
| 4 | 25%FMA/35%MMA/40%BA | 42.5 | 70.45 |
| 4 | 25%FMA/35%MMA/40%BA | 36.7 | 81.20 |
| 6 | 100%FMA | 62.9 | 57.0 |
| 6 | 100%FMA | 41.3 | 90.0 |
| 6 | 100%FMA | 29.2 | 100.0 |

TABLE 3

| Silicon Containing Acrylic Polymers | | | |
|---|---|---|---|
| Example Number | Polymer Composition | CED | Weight % $CO_2$ at 1600 psi and 60 ° C. |
| 1 | 47%MMA/53%BA | 92.5 | 43.2 |
| 7 | 30%A-174/33%MMA/37%BA | 92.5 | 42.2 |
| 8 | 30%MPTS/33%MMA/37%BA | 79.6 | 49.7 |
| 9 | 30%TSM/33%MMA/37%BA | 85.0 | 48.5 |

**TABLE 4**

**Vinyl Polymers**

| Example Number | Polymer Composition | CED | Weight % $CO_2$ at 1600 psi and 60°C. | |
|---|---|---|---|---|
| 1 | 47%MMA/53%BA | 92.5 | 43.2* | 43.5** |
| 10 | 100 % Vinyl Acetate | 98.0 | 45.4* | 47.8** |
| 11 | 100 % Vinyl Pivalate | 82.4 | 48.2* | 51.6** |
| 12 | 100 % Vinyl Neononanoate | --- | 39.3* | 44.6** |

* Resin in pentyl propionate

** Resin in propylene glycol monomethylether acetate

TABLE 5

| Epoxy Polymers | | | | |
|---|---|---|---|---|
| Example Number | Polymer Composition | $M_n$ | Percent Total Solids | Weight % $CO_2$ at 1600 psi and 60°C. |
| 13 | 78%Bis-A/22%Epon 829 | 803 | 60.0 | 17.0 |
| 14 | 72%Bis-AF/28%Epon 829 | 663 | 60.0 | 21.7 |
| 15 | 67%Bis-A/33%Epon 829 | 4163 | 50.0 | 9.9 |
| 16 | 59%Bis-AF/41%Epon 829 | 6315 | 50.0 | 19.5 |

TABLE 6

| Polyester Polymers | | | |
|---|---|---|---|
| Example Number | Polymer Composition | % Total Solids | Weight % $CO_2$ At 1600 PSI and 60°C. |
| 17 | 1,4-Butanediol/Diethyl Glutarate | 70 | 26.6 |
| 18 | 1,4-Butanediol/Diethyl Hexafluoroglutarate | 70 | 40.0 |

## Claims

**1.** A transportable polymer-fluid composition comprising

(I) a dissolved fluid which at normal temperature and pressure at standard conditions of 0°C. and one atmosphere (STP) is a gas; and

(II) a thermoplastic or thermosettable polymer having

(a) a plurality of moieties with the intermolecular disruption characteristics of mono, di or tri substituted fluorine on carbon and mono, di or tri substituted methyl on carbon or silicon, in which said carbon and silicon are a part of, or are directly or indirectly covalently attached to, the skeleton of the polymer's main structure, and are each no more than about 12 covalently bonded atoms from the covalent linkage to an atom in the main structure of the polymer, and

(b) the properties of

(i) enhanced expansivity,

(ii) reduced cohesive energy density or

(iii) both (i) and (ii),

thereby allowing more fluid (I) to be dissolved therein.

2. The transportable polymer-fluid composition of claim 1 wherein the thermoplastic or thermosettable polymer is an acrylic polymer.

3. The transportable polymer-fluid composition of claim 1 wherein the thermoplastic or thermosettable polymer is a vinyl polymer.

4. The transportable polymer-fluid composition of claim 1 wherein (II) is an epoxide polymer, a polyester, a silicon containing polymer or a fluorine containing polymer.

5. The transportable polymer-fluid composition of claim 1 wherein (II) contains mono, di or tri substituted methyl on carbon or silicon.

6. The transportable polymer-fluid composition of claim 4 wherein the fluorine containing polymer contains monosubstitution, disubstitution or trisubstitution of fluorine on carbon.

7. The process for making a transportable polymer-fluid composition which comprises pressuring, at a predetermined temperature with mixing,

(I) a dissolved fluid which at normal temperature and pressure at standard conditions of 0 ° C. and one atmosphere (STP) is a gas; and

(II) a portion of a thermoplastic or thermosettable polymer having

(a) a plurality of moieties with the intermolecular disruption characteristics of mono, di or tri substituted fluorine on carbon and mono, di or tri substituted methyl on carbon or silicon, in which said carbon and silicon are a part of, or are directly or indirectly covalently attached to, the skeleton of the polymer's main structure, and are each no more than about 12 covalently bonded atoms from the covalent linkage to an atom in the main structure of the polymer, and

(b) the properties of

(i) enhanced expansivity,

(ii) reduced cohesive energy density or

(iii) both (i) and (ii),

(III) in a closed presure resistant container until the desired amount of fluid is dissolved in the polymer and a homogenous composition is produced.

8. The process of claim 7 wherein the pressure and temperature achieved is sufficient to create a supercritical or near-supercritical fluid of the gas from which it is derived.

9. The process of claim 8 wherein the selected temperature and pressure is correlated with the critical temperature and pressure of the gas precursor to the fluid.

10. The process of claim 7 or 8, wherein the dissolved fluid is carbon dioxide.

11. The transportable polymer-fluid composition of one of the claims 1 to 6 wherein the dissolved fluid (I) is supercritical fluid or near supercritical fluid.

12. The transportable polymer-fluid composition of claim 11 wherein the dissolved fluid (I) is carbon dioxide.

13. The transportable polymer-fluid composition of claim 1 wherein the polymer (II) at its use temperature is a solid.

Fig. 1

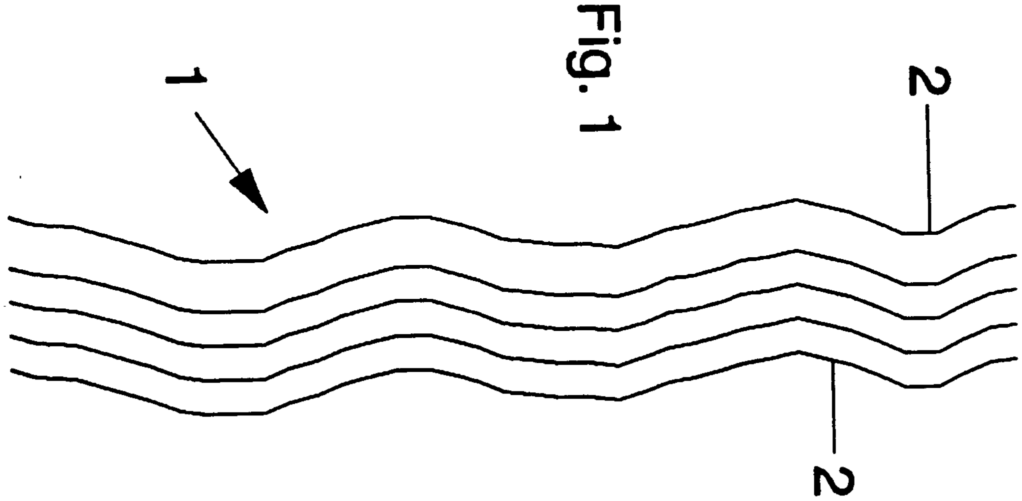


Fig. 2

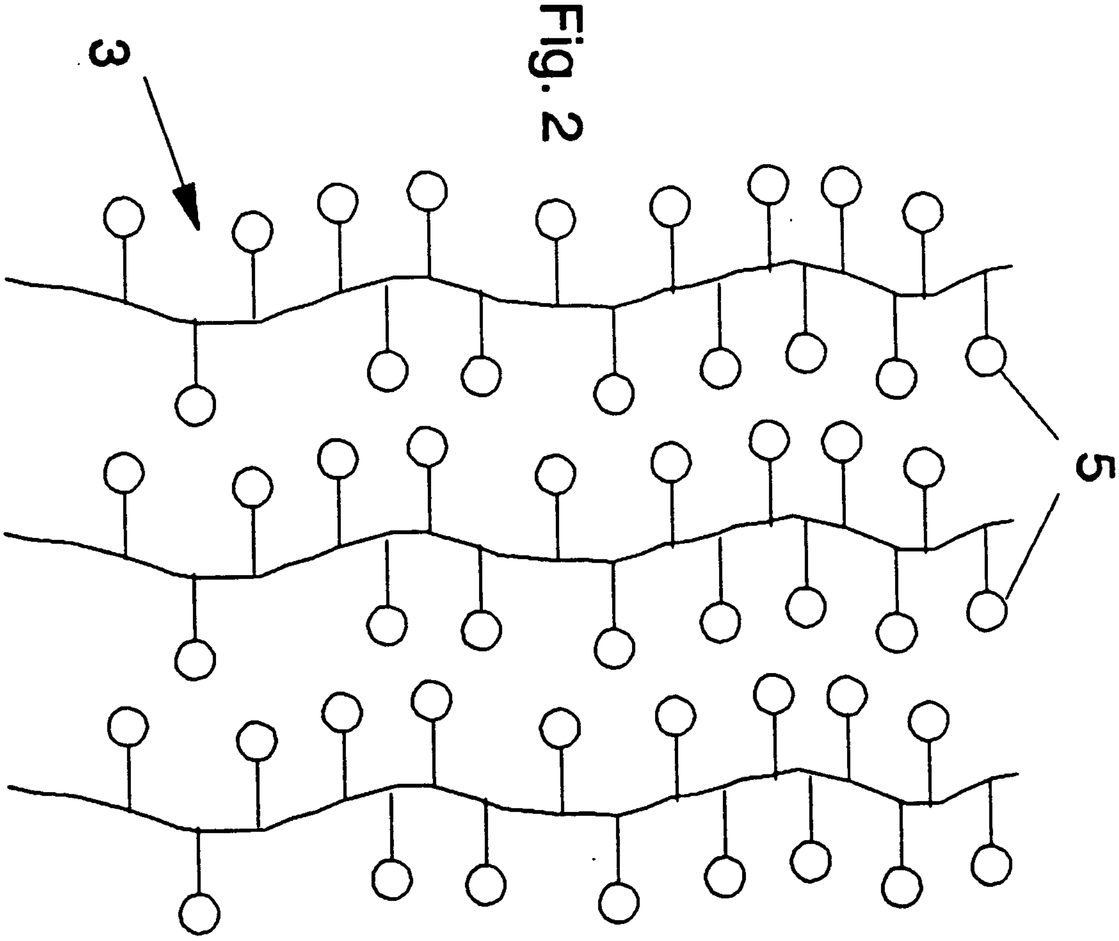

Figure 3

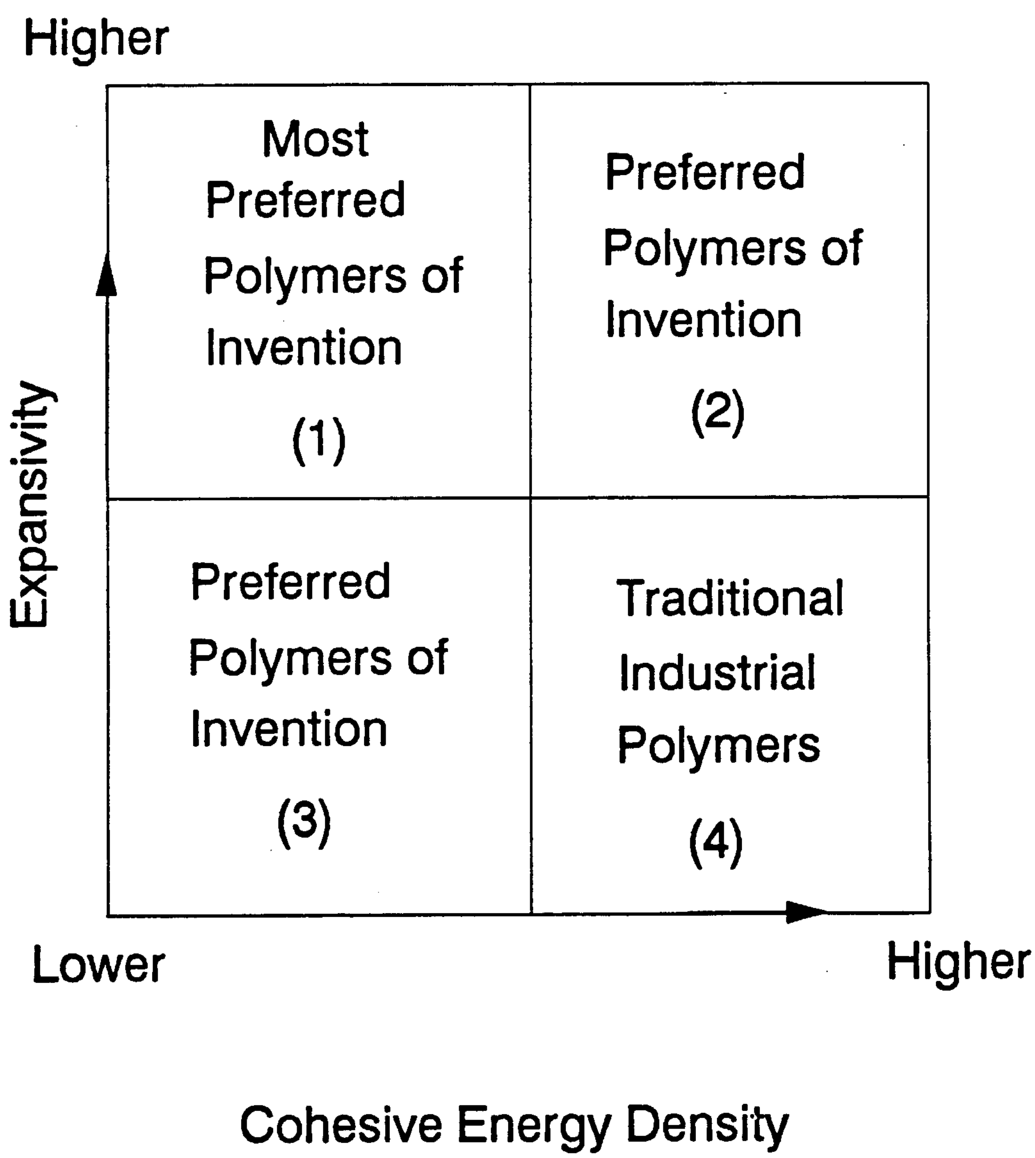
Higher
Most Preferred Polymers of Invention (1)
Preferred Polymers of Invention (2)
Expansivity
Preferred Polymers of Invention (3)
Traditional Industrial Polymers (4)
Lower
Higher
Cohesive Energy Density